# EUROPEAN PATENT APPLICATION

(11) **EP 3 150 436 A2**
(43) Date of publication of application: **05.04.2017**
(21) Application number: 16187195.9
(22) Date of filing: 05.09.2016
(51) Int. Cl.: B60Q 5/00, G08G 1/16

(54) **HAZARD INDICATING SYSTEM AND METHOD**

(30) Priority: 02.10.2015 GB 201517399
(71) Applicant: Ford Global Technologies, LLC, Dearborn, MI 48126 (US)
(72) Inventor: KELLY, Steven, London, EC2A 3HP (GB); FEARNS, Liberty, London, E6 1NY (GB); HOGGARTH, Marcus, St. Albans, Hertfordshire AL1 4EP (GB); COOK, Susan, London, SE4 2LR (GB)
(74) Representative: Dowling, Andrew

(57) **Abstract**

A method of indicating hazards to a driver of a motor vehicle, the method comprising:
determining the presence of a potential hazard;
determining a direction to the potential hazard relative to the driver of the motor vehicle;
selecting one or more of a plurality of speakers provided in the motor vehicle and surrounding the driver, the one or more speakers being in substantially the same direction relative to the driver as the potential hazard; and
emitting a warning sound from said one or more speakers.

## Description

### Technical Field

The present disclosure relates to a method and system for indicating hazards to a driver of a motor vehicle and particularly although not exclusively relates to providing the driver with a warning sound from one or more of a plurality of speakers, the one or more speakers being in substantially the same direction relative to the driver as the hazard.

### Background

A driver of a motor vehicle may be faced with multiple hazards at any particular time. Some hazards will be visible to the driver while others may not. Furthermore, multiple hazards may be visible to the driver at a particular time, but the driver may be unable to focus on all of the visible hazards, or to do so may impair the driver's ability to process the hazards and respond accordingly. The present disclosure therefore seeks to improve the driver's hazard awareness and ability to process hazards whether visible or not.

### Statements of Invention

According to an aspect of the present disclosure, there is provided a method of indicating hazards to a driver of a motor vehicle, the method comprising:
determining the presence of a potential hazard;
determining a direction to the potential hazard relative to the driver of the motor vehicle;
selecting one or more of a plurality of speakers provided in the motor vehicle and surrounding the driver, the one or more speakers being in substantially the same direction relative to the driver as the potential hazard; and
emitting a warning sound from said one or more speakers.

The method may further comprise tracking the potential hazard. The direction to the potential hazard may be updated. Which of the plurality of speakers the warning sound is emitted from may be adjusted, so that the warning sound may come from substantially the same direction as the potential hazard.

The method may further comprise emitting the warning sound from a pair of neighbouring speakers if the potential hazard direction is between the neighbouring speakers. The warning sound may be emitted at a higher volume from a first speaker of the pair of neighbouring speakers than a second speaker of the pair of neighbouring speakers if the potential hazard direction is closer to the first speaker than the second speaker. For example, the method may further comprise fading in and fading out successive speakers as the direction to the potential hazard moves.

The method may further comprise amplifying a sound from the hazard to provide the warning sound. For example, if the hazard is an emergency response vehicle, such as a fire engine, police car or ambulance, the warning sound may comprise an amplification of a sound coming from a siren on the emergency response vehicle.

Additionally or alternatively, the method may further comprise emitting a predetermined warning sound for the potential hazard, e.g. for hazards that emit little or no sound, such as bicycles, pedestrians, bollards, etc. A predetermined warning sound may also be overlaid over hazards that do emit a sound, such as emergency response vehicles or any other vehicle. The predetermined warning sound may be associated with the particular hazard, for example the predetermined warning sound comprises one or more words associated with the hazard. In a particular example, the predetermined warning sound could comprise the words "bicycle" or "pedestrian" to warn the driver of a bicycle or pedestrian respectively.

The method may comprise attenuating other sounds audible within the vehicle, such as sounds from an audio system and/or a visual system of the vehicle, for example if a potential hazard is detected. Attenuation of these other sounds may help to heighten the driver's awareness of the warning sound.

The method may further comprise determining the distance of potential hazard from the vehicle. The volume of the warning sound may be increased as the potential hazard gets closer to the vehicle. Likewise, the volume of the warning sound may be decreased as the potential hazard gets further from the vehicle.

The method may further comprise changing the frequency of the warning sound as the relative velocity between the potential hazard and the vehicle changes to simulate the Doppler effect.

The method may comprise using a hazard detection system on board the vehicle for determining the presence of a potential hazard. The hazard detection system may use sensors, such as all-weather radar, lasers and/or camera sensors to detect a hazard. The method may further comprise communicating with another vehicle to determine the presence of a potential hazard, e.g. sensed by the another vehicle and which may not yet be visible or detectable by the vehicle's own hazard detection system. The potential hazard may be the other vehicle or a potential hazard detected by the other vehicle. For example, an emergency response vehicle may broadcast its location and the vehicle may receive such a broadcast and determine the direction to the emergency response vehicle based on the data received.

Additionally or alternatively, the method may further comprise communicating with a server to determine the presence of the potential hazard. Other vehicles may provide the server with information about potential hazards.

According to a second aspect of the present disclosure there is provided a hazard indicating system for indicating hazards to a driver of a motor vehicle, wherein the system comprises one of more controllers configured to carry out any of the above-mentioned methods.

A vehicle may comprise the above-mentioned hazard indicating system.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a flow diagram depicting a method according to an arrangement of the present disclosure;
Figures 2a and 2b are schematic top views depicting a system according to an arrangement of the present disclosure with Figure 2a showing a vehicle and a hazard at a first relative positon and Figure 2b showing the vehicle and hazard at a second relative positon; and
Figures 3a and 3b are schematic top views depicting the system according to the arrangement of the present disclosure with Figure 3a showing the vehicle and a further hazard at a first relative positon and Figure 2b showing the vehicle and hazard at a second relative positon.

### Detailed Description

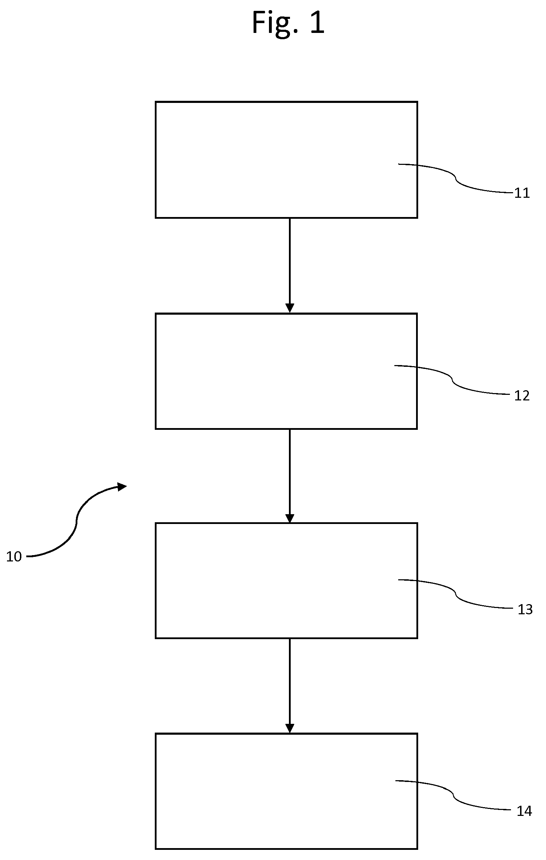

With reference to Figure 1, the present disclosure relates to a method 10 for indicating hazards to a driver of a motor vehicle. The method comprises a first step 11 of determining the presence of a potential hazard. In a second step 12, a direction to the potential hazard relative to the driver of the motor vehicle is determined. The direction may extend from the driver's head. The direction may extend to a particular point on the hazard, e.g. a noise emitting point, such as a siren, or any other particular point. The direction may be in vector or polar coordinates or any other form. In a third step 13, one or more of a plurality of speakers provided in the motor vehicle and surrounding the driver may be selected. The selected one or more speakers are in substantially the same direction relative to the driver as the potential hazard. In a fourth step 14, a warning sound from the selected one or more speakers is emitted.

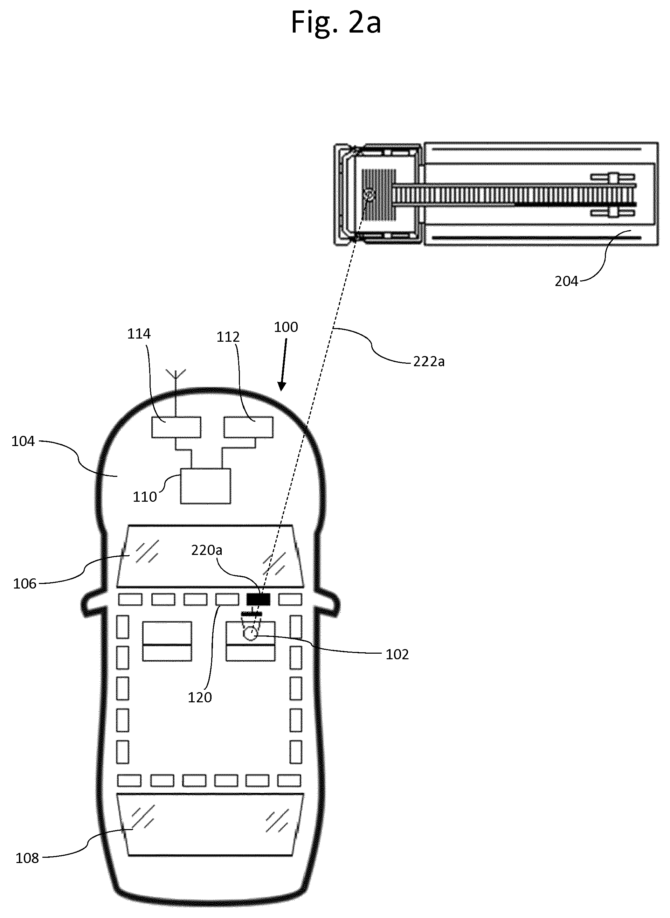

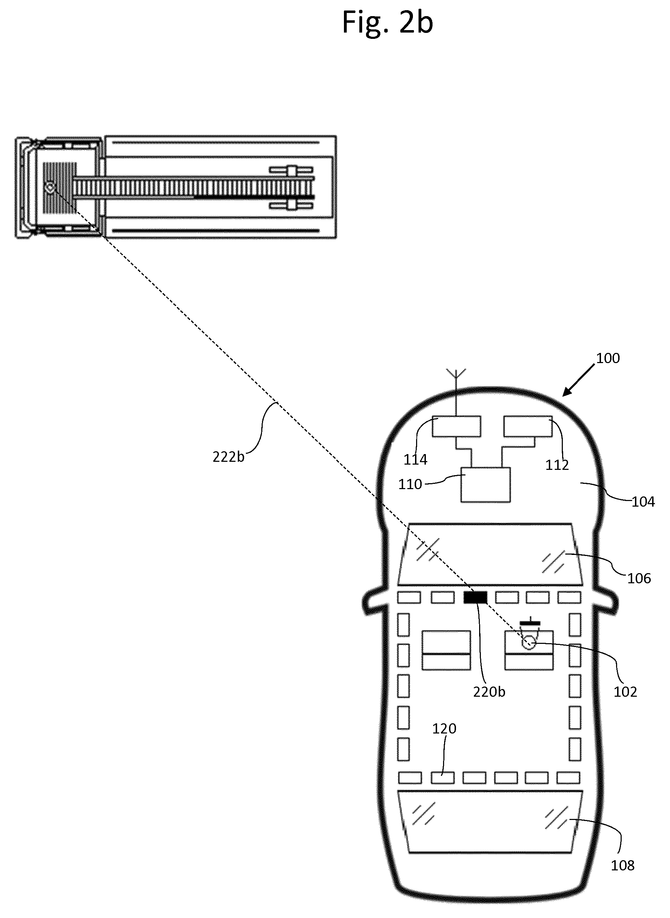

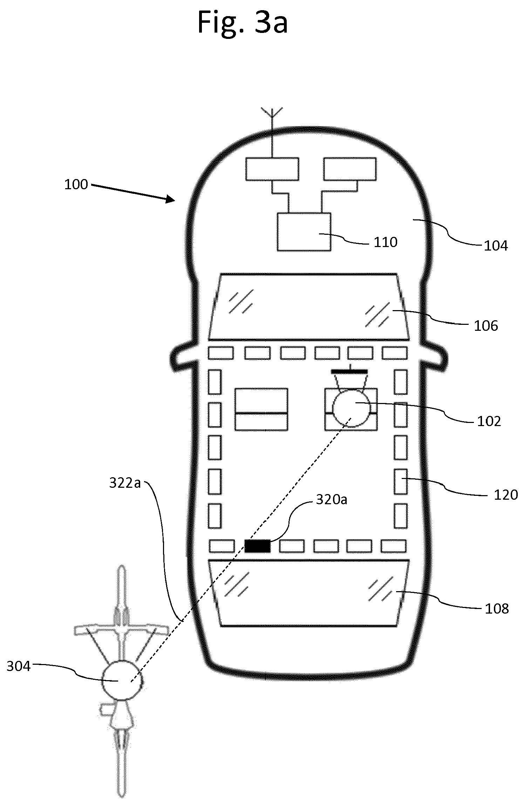

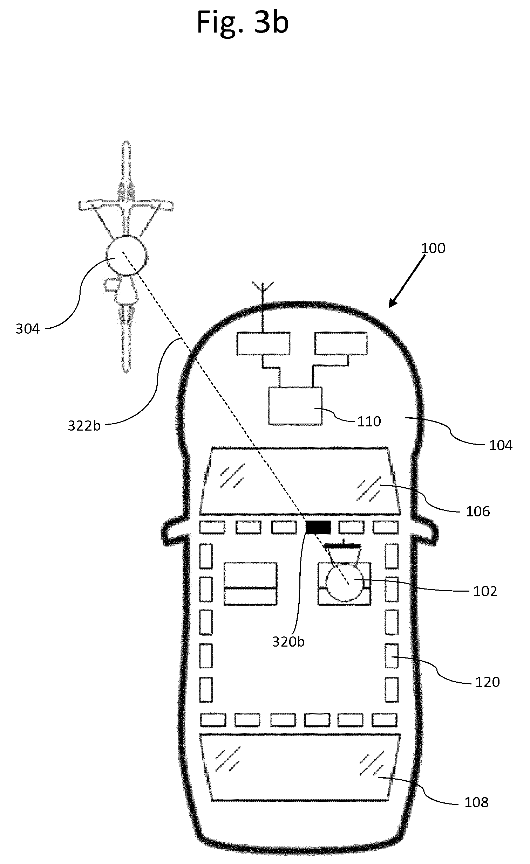

With reference to Figures 2 and 3, the present disclosure also relates to a system 100 for indicating hazards to a driver 102 of a vehicle 104, such as a motor vehicle. The system 100 may comprise one or more controllers 110 configured to carry out the above described method 10. In particular, the controllers 110 may determine the presence of a potential hazard and calculate a direction to the potential hazard relative to the driver 102. The controller 110 may then select one or more of a plurality of speakers 120 that surround the driver 102, the selected one or more speakers being substantially in the same direction relative to the driver as the potential hazard. The controller 110 then sends a signal such that a warning sound is emitted from the selected one or more speakers.

The plurality of speakers 120 substantially surrounds the driver 102 of the vehicle 104. The plurality of speakers 120 may be provided within the cabin of the vehicle 104. In particular, the plurality of speakers 120 may be disposed about a perimeter of the cabin. The speakers 120 may also surround passengers of the vehicle 104 in addition to the driver 102 and as a result may not be centred on the driver of the vehicle (although in alternative arrangements the speakers may be centred on the driver). By way of example, the plurality of speakers 120 may be provided in a roof of the vehicle 104, e.g. along an edge of the roof where the roof meets the front and rear windscreens 106, 108 and the doors of the vehicle 104. The plurality of speakers 120 may additionally or alternatively be provided in trim sections of the vehicle 104, for example in the dashboard, pillars and/or door trims of the vehicle 104. As depicted in Figures 2 and 3, the plurality of speakers 120 may be disposed in a quadrilateral arrangement, although it is equally envisaged that they may be arranged in any other shape, e.g. a circle.

The plurality of speakers 120 may be provided in sufficient number so that the driver 102 cannot necessarily discern from which of the speakers 120 the warning sound is being emitted from. For example, there may be at least eight speakers 120 distributed around the driver 102. The speakers 120 may or may not be equi-angularly distributed about the driver 102. In the case of the driver 102 not being at a centre of the distributed speakers 120, e.g. as depicted in Figures 2 and 3, the spacing between speakers 120 closer to the driver 102 may be less than the spacing between speakers 120 further away from the driver 102. Such variance in speaker spacing may ensure that the speakers 120 are substantially equi-angularly distributed about the driver. The number of speakers 120 required may thus be reduced. Alternatively, the speakers 120 may be distributed with equal spacing.

The plurality of speakers 120 may form part of an audio sound system of the vehicle 104, although it will be appreciated that different or additional speakers may form part of such an audio sound system.

The system 100 may further comprise one or more sensors 112 configured to detect the presence of a hazard, such as an emergency response vehicle, any other vehicle which may be in danger of colliding with the vehicle 104, a pedestrian, a cyclist or any other hazard that is desirable for the driver 102 of the vehicle 104 to be aware of. It will be appreciated that the driver may take evasive action to avoid such hazards or may simply monitor the potential hazard and take no action if not required.

The sensors 112 may comprise any sensor that is capable of detecting such hazards, for example a camera system, a radar system, a laser system or any other system that is capable of detecting hazards around the vehicle 104. Such sensors 112 may already exist on the vehicle 104 for example as part of a collision avoidance system, parking system or any other system. In the case of the sensors comprising cameras, the controller 110 may comprise an image processing module that is configured to process the data from the cameras and establish what type of hazards there may be around the vehicle and where such hazards are relative to the vehicle. The controller 110 and/or sensors 112 may be configured to determine in which direction the hazard is relative to the vehicle 104, in particular from the driver of the vehicle. Accordingly, a plurality of sensors 112 may be provided, e.g. distributed, around the vehicle. The controller 110 may be configured to determine the direction from the driver of the vehicle to the hazard using data from the sensors 112. For example, the sensors 112 may establish in which direction the hazard is relative to the sensor and the controller 110 may apply a correction to determine the direction to the hazard relative to the driver. Such corrections may be small in cases where the hazard is far away or approximately in line with both the sensor and the driver. However, such corrections may be more significant, e.g. in cases where the driver, sensor and hazard are not in line with one another.

In addition to or alternatively from the sensors 112, the system 100 may comprise one or more wireless receivers 114. The wireless receivers 114 may receive data from other vehicles or a central server about potential hazards in the vicinity of the vehicle 104. For example, another vehicle may broadcast data about a potential hazard that may be sensed by the another vehicle and may not be visible to the current vehicle 104. The other vehicle may have sensed such a hazard and determined its location and broadcast such data to the current vehicle 104. Using such data the controller 110 may then determine the relative position of the hazard to the driver 102 of the current vehicle 104. The other vehicle may broadcast data relating to the nature of the hazard in addition to its location. The hazard may be the presence of the other vehicle itself or some other hazard that the other vehicle has detected. For example, an emergency response vehicle may broadcast data warning other vehicles in the vicinity about the presence of the emergency response vehicle. Such data may also include the current location of the emergency response vehicle and likely future location of the emergency response vehicle. Such data may be sent wirelessly from vehicle to vehicle or via a central server.

With reference to Figure 2, an example scenario is depicted. In Figure 2a, an emergency response vehicle 204 is in a first position relative to the vehicle 104. By virtue of one or more sensors 112 and/or the wireless receiver 114 the controller 110 has determined the presence of the emergency response vehicle 204, which may present a hazard to the current vehicle 104. With data from the sensors 112 and/or receiver 114, the controller 110 calculates the direction from the driver of the vehicle, e.g. from the driver's head, to the emergency response vehicle 204, e.g. a particular point on the emergency response vehicle 204, such as the siren. The controller 110 knows in which seat the driver 102 must be sitting and therefore the approximate location of the driver's head. The controller 110 then selects speakers 220a that are in line with the directional line 222a from the driver 102 to the emergency response vehicle 204. Had the directional line 222a from the driver to the emergency response vehicle 204 passed between two neighbouring speakers 220a, the controller 110 may have selected the neighbouring speakers 220a either side of the directional line 222a. The controller 110, which is operatively coupled to the speakers 120, then sends an instruction to emit a warning sound from the selected speakers 220a.

The system 100 tracks the hazard, e.g. emergency response vehicle 204, and if the hazard moves relative to the vehicle 104, e.g. as depicted in Figure 2b, the controller 110 may select different speakers 220b that are in line with the directional line 222b to the hazard and the warning sound may then be emitted from these different speakers.

The warning sound may comprise the sound emitted by the hazard e.g. the siren of the emergency response vehicle 204, which may be amplified. Additionally or alternatively, the warning sound may comprise a predetermined sound, e.g. one that is associated with that particular hazard. For example, the warning sound could comprise textual data with words indicating the nature of the hazard. By way of example, the warning sound could comprise the words "fire engine".

The driver's awareness of the hazard may be improved by hearing a warning sound coming from the same direction as the hazard. Therefore, from the audible information, the driver may be able to determine approximately in which direction the hazard is without necessarily having to avert their gaze. This may be particularly beneficial in cases where the hazard may not have otherwise been visible to the driver or where the driver's attention needs to be focused elsewhere at that particular time. It is also advantageous that the relative direction of the hazard is tracked and that the warning sound is emitted from the speaker in the same direction in real time. The driver is therefore able to audibly track the direction of the hazard.

With reference to Figures 3a and 3b a further scenario is depicted. In this scenario a hazard in the form of a cyclist 304 approaching the rear of the vehicle is shown. The sensors 112 and/or wireless receiver 114 may determine the presence of the cyclist and with data from the sensors 112 and/or receiver 114 the controller 110 may determine the nature of the hazard and the relative direction from the driver to the hazard. As depicted in Figure 3a, the controller 110 may then select one or more speakers 320a which are in line with the directional line 322a from the driver to the cyclist 304. As shown in Figure 3b, when the cyclist 304 passes the inside of the vehicle 104, the relative direction from the driver changes and the controller 110 selects different speakers 320b, which are in line with the new directional line 322b and the warning sound is emitted from these new speakers.

As the cyclist may have little or no sound associated therewith, the warning sound may comprise a pre-determined warning sound associated with a hazard in the form of cyclists. For example, the warning sound may comprise the word "bicycle". The driver 102 of the vehicle is therefore provided with a warning that indicates to the driver the nature of the hazard and the relative direction of the hazard.

In the particular example shown in Figure 3, the hazard may be in a blind spot of the driver and would not have otherwise been visible. Furthermore as the cyclist passes inside the vehicle, the driver is provided with information that indicates the relative position of the cyclist from the vehicle 104 without the driver having to avert their gaze.

In addition to emitting the warning sound, the controller 110 may attenuate other sounds within the vehicle. For example, any audio systems playing media content may have their volume turned down or off. Such attenuation may help to heighten the driver's awareness of the warning sound.

The controller 110 may additionally determine the distance of the hazard from the vehicle, e.g. using data from the wireless receiver 114 and/or sensors 112. The warning sound may convey information that indicates the distance from the vehicle 104 to the hazard. For example, the warning sound may comprise words that provide such distance information, e.g. "hazard at five metres". Additionally or alternatively, the frequency and/or volume of a warning sound may vary with the distance of the hazard from the vehicle. For example, the warning sound may get louder as the hazard gets closer to the vehicle or the warning sound may get quieter as the hazard gets further away from the vehicle.

The controller 110 may also be configured to determine the relative velocity between the hazard and the vehicle 104, e.g. using data from the wireless receiver 114 and/or sensors 112. The frequency of the warning sound may vary according to the relative velocity between the hazard and the vehicle 104. In this way, the Doppler effect may be simulated. For example, as the vehicle 104 passes a hazard the frequency of the warning sound may change in a manner similar to that experienced when passing an emergency response vehicle with its siren sounding. A more natural warning may thus be provided to the driver 102 of the vehicle 104.

If the directional line 222, 322 from the driver 102 to the hazard passes between neighbouring speakers 120, the controller 110 may emit sound from each of the neighbouring speakers. The controller 110 may emit sound from each of the speakers at equal volume. Alternatively, to provide a smoother transition between speakers as the directional line moves with the hazard, the controller may provide a warning sound with greater volume from the speaker 120 that is closest to the directional line. Thus, as the directional line moves from one speaker to the next a smooth transition in volume is attained and a warning sound is provided to the driver. The driver is given the impression that the sound is not coming from a particular speaker but is instead gradually moving.

It will be appreciated by those skilled in the art that although the invention has been described by way of example, with reference to one or more examples, it is not limited to the disclosed examples and alternative examples may be constructed without departing from the scope of the invention as defined by the appended claims.

## Claims

1. A method (10) of indicating hazards to a driver (102) of a motor vehicle (104), the method comprising:
determining the presence of a potential hazard;
determining a direction to the potential hazard relative to the driver of the motor vehicle;
selecting one or more of a plurality of speakers (120) provided in the motor vehicle and surrounding the driver, the one or more speakers (220a) being in substantially the same direction relative to the driver as the potential hazard; and
emitting a warning sound from said one or more speakers.

2. The method of claim 1, wherein the method further comprises:
tracking the potential hazard;
updating the direction to the potential hazard; and
adjusting which of the plurality of speakers (120) the warning sound is emitted from so that the warning sound comes from substantially the same direction as the potential hazard.

3. The method of claim 2, wherein the method further comprises fading in and fading out successive speakers (120) as the direction to the potential hazard moves.

4. The method of any of the preceding claims, wherein the method further comprises emitting the warning sound from a pair of neighbouring speakers (220a) if the potential hazard direction is between the neighbouring speakers.

5. The method of claim 4, wherein the method further comprises emitting the warning sound at a higher volume from a first speaker of the pair of neighbouring speakers (220a) than a second speaker of the pair of neighbouring speakers if the potential hazard direction is closer to the first speaker than the second speaker.

6. The method of any of the preceding claims, wherein the method further comprises amplifying a sound from the hazard to provide the warning sound and/or emitting a predetermined warning sound for the potential hazard.

7. The method of any of the preceding claims, wherein the method comprises attenuating other sounds audible within the vehicle (104).

8. The method of any of the preceding claims, wherein the method further comprises determining the distance of the potential hazard from the vehicle (104).

9. The method of claim 8, wherein the method further comprises increasing the volume of the warning sound as the potential hazard gets closer to the vehicle (104) and/or decreasing the volume of the warning sound as the potential hazard gets further from the vehicle.

10. The method of any of the preceding claims, wherein the method further comprises changing the frequency of the warning sound as the relative velocity between the potential hazard and the vehicle (104) changes to simulate the Doppler effect.

11. The method of any of the preceding claims, wherein the method comprises using a potential hazard detection system on the vehicle for determining the presence of a potential hazard.

12. The method of any of the preceding claims, wherein the method further comprises communicating with another vehicle to determine the presence of the potential hazard.

13. The method of any of the preceding claims, wherein the method further comprises communicating with a server to determine the presence of the potential hazard.

14. A hazard indicating system (100) for indicating hazards to a driver of a motor vehicle (104), wherein the system comprises one of more controllers (110) configured to carry out the method of any of the preceding claims.

15. A motor vehicle (104) comprising the hazard indicating system (100) of claim 14.
